# EUROPÄISCHE PATENTSCHRIFT

(11) **EP 3 084 534 B1**
(45) Veröffentlichungstag und Bekanntmachung des Hinweises auf die Patenterteilung: **07.08.2019**
(21) Anmeldenummer: 14805815.9
(22) Anmeldetag: 25.11.2014
(51) Int. Cl.: G05B 19/042, G01F 1/32

(54) **FELDGERÄT DER PROZESSAUTOMATISIERUNG**
PROCESS AUTOMATION FIELD DEVICE
APPAREIL DE TERRAIN POUR AUTOMATISMES DE PROCESSUS

(30) Priorität: 17.12.2013 DE 102013114195
(43) Veröffentlichungstag der Anmeldung: 26.10.2016
(73) Patentinhaber: Endress+Hauser Flowtec AG, 4153 Reinach (BL) (CH)
(72) Erfinder: HÖCKER, Rainer, 79761 Waldshut (DE); CARR, Michael, Winsford - Cheshire CW7 2LL (CH)
(74) Vertreter: Andres, Angelika Maria
(86) Internationale Anmeldenummer: PCT/EP2014/075450
(87) Internationale Veröffentlichungsnummer: WO 2015/090854

(56) Entgegenhaltungen:
- US-A1- 2012 261 991
- US-A1- 2013 009 472

## Beschreibung

Die vorliegende Erfindung betrifft ein Feldgerät der Prozessautomatisierung.

Feldgeräte im Allgemeinen und Durchflussmessgeräte im Besonderen werden oft an unzugänglichen Orten eingebaut, an denen die lokale Anzeige nicht abgelesen werden kann. Hier werden Anordnungen eingesetzt, bei denen nur die unbedingt notwendige Messelektronik an der Prozessleitung angebracht ist, und die Auswerteelektronik und Anzeigeeinheit an einem leicht zugänglichen Ort montiert wird. Diese Anordnung wird auch dann gerne gewählt, wenn die Temperaturen nahe der Prozessleitung sehr hoch sind.

Ein Verbindungskabel zwischen der Messelektronik und der Auswerte- und Anzeigeelektronik transportiert dabei sowohl die Energie zum Betrieb der Messelektronik als auch die Signale und Daten von der Messelektronik zur Auswerte- und Anzeigeelektronik. Diese Kabelverbindung ist in der Regel speziell auf die Anwendung abgestimmt und aus physikalisch-technischen Gründen in seiner Länge begrenzt.

Aus der DE 20107112 U1 ist ein Temperatursensor bekannt, welcher einen thermoelektrischen Wandler aufweist. Dieser dient der Energieversorgung des gesamten Temperatursensors, also sowohl einer Sensoreinheit als auch einer Anzeige- und/oder Auswerteeeinheit.

Aus der US 2013/0009472 A1 ist ein Feldgerät mit einer drahtlosen Kommunikationseinheit und einem Energieversorger, der dazu eingerichtet ist die drahtlose Kommunikationseinheit zu versorgen, bekannt. Dabei umfasst der Energieversorger eine austauschbare erste Stromquelle und eine zweite Stromquelle, die eingerichtet ist das Feldgerät mit Strom zu versorgen, wenn die erste Stromquelle entnommen ist. Weiterhin wird offenbart, dass die erste Stromquelle auch einen Energie-Harvester umfassen kann und dass die zweite Stromquelle das Feldgerät versorgt, wenn der Energie-Harvester nicht genug Energie generiert.

Ausgehend von diesem Stand der Technik ist es die Aufgabe der vorliegenden Erfindung eine höhere Flexibilität bezüglich der Anordnungsvarianten von Sensoreinheit und Anzeigeneinheit bei der Installation und den Betrieb eines Feldgerätes zu erreichen.

Ein erfindungsgemäßes Feldgerät der Prozessautomatisierung zur Ermittlung einer Prozessgröße und/oder der Zusammensetzung eines Mediums, umfasst eine Sensoreinheit und eine Anzeigeeinheit.

Die Sensoreinheit und die Anzeigeeinheit räumlich getrennt und beabstandet zueinander angeordnet. Beide befinden sich insbesondere in jeweils einem gesonderten Gehäuse welche die Abmessungen der jeweiligen Einheit zur Umwelt hin begrenzt. In einem typischen Anwendungsbeispiel kann eine Rohrleitung mit einem darin fließenden Medium an der Decke einer Industriehalle verlaufen. An dieser Rohrleitung kann die Sensoreinheit, z.B. ein Vortexdurchflussmess-Sensoreinheit angeordnet sein. Die Anzeigeeinheit bezüglich der Messgröße "Durchfluss" ist auf Augenwandung an der Wandung der Industriehalle angeordnet und ist für den Prozesstechniker gut und bequem ablesbar. Dabei kann die Anzeigeeinheit auch ein Auswertemodul bzw. eine Auswerteelektronik enthalten.

Weiterhin erfindungsgemäß verfügt die Anzeigeeinheit und die Sensoreinheit über eines oder mehrere Kommunikationsmittel verfügen, welche ausgelegt sind zum Aufbau eines drahtlosen Datentransfers zwischen der Anzeigeeinheit und der Sensoreinheit des Feldgerätes durchzuführen. Derartige Kommunikationsmittel sind z.B. ein Funkwellensender und ein Funkwellenempfänger. Die Getrenntbauweise zwischen Sensoreinheit und Anzeigeeinheit macht gerade in den Orten Sinn, in welchen die Sensoreinheit nur schwer erreichbar ist. An diesen Orten ist allerdings die Energieversorgung der Sensoreinheit und des angeschlossenen Kommunikationsmittels ebenfalls problematisch. Idealerweise sollten daher die Kommunikationsmittel der Sensoreinheit mit sehr wenig Energie auskommen. Daher bietet sich insbesondere als Kommunikationsmittel Sender und Empfänger aus dem Bereich der Nahfunktechnik, so z.B. Bluetooth-Technologie. Das geringe Datenübertragungsvolumen und die geringe Reichweite der Kommunikationsmittel der Nahfunktechnik sind zwar von Nachteil, werden aber bei Feldgeräten nicht zwingend benötigt um eine hinreichend gute Funktionalität des Geräts zu gewährleisten. Zugleich ist allerdings eine Datenübertragung bei wenig Energieverbrauch ermöglicht.

Erfindungsgemäß wird zumindest das Kommunikationsmittel der Sensoreinheit mittels eines Energie-Harvesters (Energie-Ernter), also einer Einheit, welche Energie aus dem Prozess bzw. Prozessmedium gewinnt, betrieben. Somit kann die Sensoreinheit an schwer zugänglichen Bereichen eingebaut werden, ohne dass eine gesonderte Energieleitung zur Energieversorgung der Sensoreinheit verlegt werden muss. Das separate Anzeigenelement hingegen kann an einem Energienetz angeschlossen werden.

Die autarke Energieversorgung eines Kommunikationsmoduls zum Betrieb einer Sensoreinheit mit abgesetzter Anzeigeeinheit stellt ein Novum im Bereich der Feldgeräte dar. Es ermöglicht einen energiesparenden Betrieb, ermöglicht eine bessere Ablesbarkeit der Messwerte und einen geringeren Installations- und Wartungsaufwand, da Energieleitungen für den Betrieb der Sensoreinheit und insbesondere den Betrieb der Kommunikationseinheit überflüssig werden.

Erhöhter Energiebedarf wird bei der Anzeigeeinheit benötigt. Diese kann allerdings durch die Getrenntbauweise an entsprechenden Energieschnittstellen eines Prozessleitsystems positioniert werden.

Das Feldgerät wird erfindungsgemäß in zumindest zwei Betriebsmodi betrieben wobei
I ein erster Betriebsmodus einen kontinuierlichen oder intermittierenden Datentransfer ausführt,
   wobei der intermittierende Datentransfer mit Sendepausen erfolgt,
   wobei Länge der Sendepausen von einer Steuervorrichtung vorgebbar ist,
   wobei als Steuergröße ein Energie-Grenzwert benutzt wird; und
II ein zweiter Betriebsmodus eine Abmeldefunktion bei Energiemangelversorgung eines der Kommunikationsmittels umfasst, in welchem zweiten Betriebsmodus sich die Sensoreinheit bei der Anzeigeeinheit im Falle einer Energiemangelversorgung abmeldet.

Im ersten Betriebsmodus kann das Gerät Daten übertragen oder steht zur Datenübertragung "on demand" bereit.

Im zweiten Betriebsmodus meldet sich die Sensoreinheit bei der Anzeigeeinheit im Falle einer Energiemangelversorgung ab. So kann mit der zur Verfügung stehenden Energie ein Signal ausgesandt werden, welches der Anzeigeeinheit anzeigt, dass eine Energiemangelversorgung vorliegt. Diese Information kann sodann ans Prozessleitsystem übertragen werden. Der Nutzer weiss dadurch, dass kein Defekt des Feldgerätes vorliegt sondern lediglich eine Energiemangelversorgung vorliegt.Neben den beiden vorbeschriebenen Betriebsmodus kann das Feldgerät selbstverständlich noch weitere Betriebsmodi aufweisen. Ein dritter Betriebsmodus kann einen Ruhezustand signalisieren, in welchem keine Messung und keine Datenübertragung erfolgt. Das Feldgerät befindet sich daher auf stand-by. Dieser Betriebsmodus ist beispielsweise bei sehr geringer Energieversorgung zu wählen.

Weitere vorteilhafte Ausgestaltungen der Erfindung sind Gegenstand der Unteransprüche.

Die Häufigkeit der Datenübertragung zwischen Sensoreinheit und Anzeigeeinheit hängt nicht unwesentlich vom Energiebedarf des Kommunikationsmittels der Sensoreinheit, da hier der Energie Harvester eine Versorgungsenergie bereitstellen muss. Ist die Energieausbeute für einen kontinuierlichen Datentransfer zu gering, so muss die Energie zwischengespeichert werden, um eine intermittierenden Sendeverkehr zu gewähren.

Als intermittierender Sendebetrieb im Sinne der vorliegenden Anmeldung ist sowohl ein Sendebetrieb mit Sendepausen zu verstehen, ein Sendebetrieb soweit ein Energievorrat erreicht ist oder ein sogenannter Sendebetrieb "on demand". Bei letzterem wird ein Messwert erst übermittelt, wenn dies vom Nutzer erwünscht ist. So z.B. durch Betätigen eines entsprechenden Knopfes an der Anzeigeeinheit.

Für eine energiesparende Arbeitsweise der Sensoreinheit ist es von Vorteil, wenn die maximale Datenübertragungsrate des drahtlosen Datentransfers gleich oder kleiner ist als 4 Mbit/s, insbesondere 3 Mbit/s. Ebenfalls energiesparend auf die Arbeitsweise wirkt sich die Reichweite der Kommunikationsmodule aus. Je geringer diese ist, desto weniger Energie wird zum Betrieb benötigt. Es ist daher von Vorteil, wenn die maximale Abstand zwischen der Sensoreinheit und der Anzeigeeinheit gleich oder kleiner ist als 25 m.

Ein besonders energiesparender Betrieb des Feldgerätes ergibt sich, sofern die maximale Datenübertragungsrate gleich oder kleiner ist als 1024 Mbit/s und der maximale Abstand zwischen der Sensoreinheit und dem Anzeigenelement kleiner oder gleich 15 m beträgt.

Bei den Kommunikationsmitteln kann es sich vorzugsweise um WPAN-Kommunikationsmittel handelt. WPAN Kommunikationstechnologie ist durch den Internationalen Standard IEEE 802.15 (gemäß der aktuellen Version zum Zwitpunkt - Dez. 2013). Unter anderem sind WPAN Kommunikationsmittel Bluetooth-Sender & - Empfänger, sowie IrDA-konforme Infrarot-Sender & Emfänger.

Die Energieversorgung der Anzeigeeinheit kann vorteilhaft über ein Prozessleitsystem erfolgen, welches zu diesem Zweck über eine oder mehrere Leitungen für den Energie- und Datenverkehr mit einem Prozessleitsystem verbunden ist.

Der Energie-Harvester ist dabei in kompakter Weise in die Sensoreinheit integriert. Dabei ist der Energie-Harvester insbesondere in einem Gehäuse der Sensoreinheit angeordnet. Im Fall eines thermischen Energie-Harvesters kann dieser idealerweise in dem Gehäuseteil angeordnet werden, der die temperaturempfindliche Vorortelektronik von der sehr heißen oder sehr kalten Rohrleitung trennt. Die Rohrleitung stellt dann zum Beispiel die Wärmequelle und das Vorortelektronik-Gehäuse die Wärmesenke dar, die über ihren Abstand und ihre Wärmeleiteigenschaften die erforderliche Temperaturdifferenz und damit den zum thermischen Energie-Ernten erforderlichen Wärmestrom erzeugen.

Nicht nur das Kommunikationsmittel, sondern auch die komplette Sensoreinheit, also der Messaufnehmer und das Kommunikationsmittel, kann durch den Harvester betrieben werden. Dabei wird der Energie-Harvester als einzige Energieversorgungsquelle genutzt. Bekannterweise ist ein Harvester von Randbedingungen abhängig z.B. von einer auftretenden Temperaturdifferenz oder von hinreichend Sonnenstrahlung. Demgegenüber tritt bei der Anzeigeeinheit keine Energiemangelversorgung durch ändernde Randbedingungen auf. Sie wird kontinuierlich von einer Energiequelle mit einer konstanten Menge an Energie versorgt. Sie wird somit unabhängig von der vom Harvester gewonnenen Energie betrieben.

Wie bereits zuvor beschrieben kann der Datentransfer intermittierend mit Sendepausen erfolgt, wobei Länge der Sendepausen von einer Steuervorrichtung vorgebbar sind. Als Steuergröße kann ein voreingestellten Zeitintervall benutzt werden. In diesem Zeitintervall sollte genug Energie gesammelt worden sein, um den Datentransfer zu ermöglichen. Alternativ oder zusätzlich kann eine Steuergröße ein voreingestellter Energie-Grenzwert sein. Sofern dieser überschritten wird, wird automatisch ein Datentransfer durchgeführt.

Das Feldgerät weist vorteilhaft zumindest zwei Betriebsmodi auf. Ein erster Betriebsmodus führt einen kontinuierlichen oder intermittierenden Datentransfer zwischen der Sensoreinheit und der Anzeigeeinheit aus. Selbstverständlich kann während des Ausführens des Betriebsmodus auch eine kontinuierliche Messung der besagten Prozessgröße und/oder Zusammensetzung des Messmediums erfolgen.

Der zweite Betriebsmodus führt eine Abmeldefunktion bei Energiemangelversorgung eines der Kommunikationsmittel aus. Sofern diese Abmeldefunktion ausgeführt wurde und die Sensoreinheit sich ordnungsgemäß abgemeldet hat, weiss das Anzeigenelement oder ggf. auch das Prozessleitsystem, dass eine Unterbrechung der Anzeige und ggf. auch der Messung der Prozessgröße oder Zusammensetzung des Messmediums aufgrund einer Energiemangelversorgung vorliegt. Dadurch erhält der Nutzer die Information, dass kein Defekt des Messgerätes vorliegt, sondern lediglich eine zeitweilige Energiemangelversorgung gegeben ist.

Es ist von Vorteil, wenn die Sensoreinheit einen Datenspeicher umfasst, in welchem Messdaten, insbesondere Messwerte, bezüglich der zu ermittelnden Prozessgröße gesammelt und bei einem Datentransfer bereitgestellt werden. Das gespeicherte Datenpaket kann übermittelt werden, wenn hinreichend Energie zur Übertragung zur Verfügung steht. Somit können Phasen mit geringer Energieausbeute vorteilhaft überbrückt werden.

Die Sensoreinheit kann zwar einen Energiezwischenspeicher aufweisen, allerdings kann die Sensoreinheit bei hinreichender Energieausbeute nicht zwingend einen Energiezwischenspeicher aufweisen.

Das Feldgerät kann insbesondere in einem explosionsgeschützten Bereichen verwendet werden. Eine mögliche Alternative zu einem Harvester wäre eine Batterie. Allerdings ist die Verwendung von Batterien gerade im sogenannten Ex-Bereich von Nachteil, da die Batterie eine anfangs sehr hohen Energiedichte bereitstellt. Diese muss aufgrund der Sicherheitsvorschriften entsprechend runterreguliert werden. Hierfür sind weitere Schaltungsbauteile notwendig. Ein Harvester liefert mehr oder minder kontinuierlich eine geringe Energiedichte. Diese wird - sofern sie für den Sendebetrieb ausreichend ist - direkt verbraucht. Eine aufwendige Anpassung einer zu hohen Energiedichte für den Ex-Bereich muss daher, anders als bei einer Batterie, bei einem Harvester nicht erfolgen.

Als Energie-Harvester kann beispielsweise und bevorzugt ein Modul eingesetzt werden, welches Energie aus einer Temperaturdifferenz gewinnt. Entsprechende Harvester sind aus der US 2005/0208908 und aus der DE 20107112 U1 bekannt, auf deren Offenbarungsgehalt vollumfänglich Bezug genommen wird. Alternativ kann auch ein Modul als Energie-Harvester genutzt werden, welches Energie aus Solarenergie gewinnt. Die vorgenannten Beispiele sind lediglich beispielhaft. Es können auch andere Energie-Harvester eingesetzt werden.

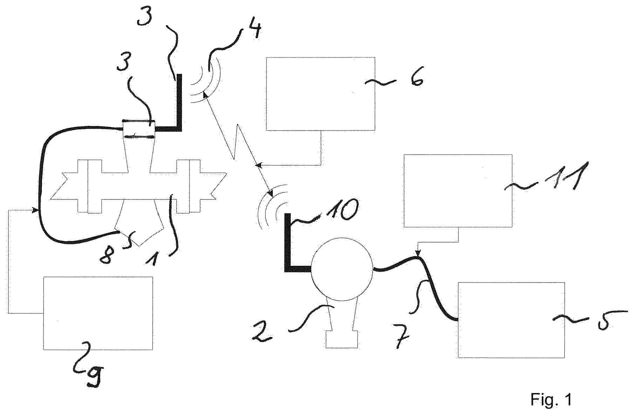

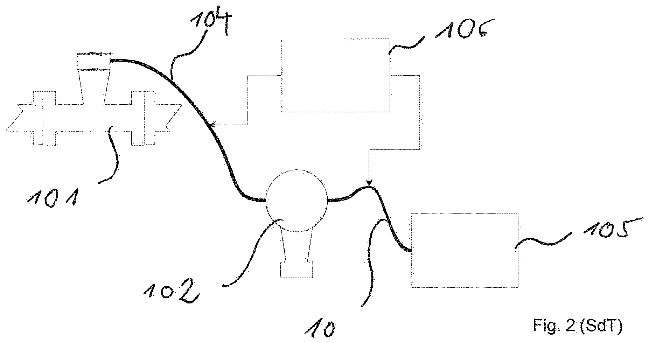

Nachfolgend soll der Gegenstand der Erfindung anhand eines Ausführungsbeispiels und unter Zuhilfenahme der Fig. 1 und 2 näher erläutert werden. Es zeigen:
Fig. 1 Eine schematische Darstellung des Aufbaus eines erfindungsgemäßen Feldgerätes; und
Fig. 2 Eine schematische Darstellung des Aufbaus eines Feldgerätes nach dem Stand der Technik.

In der Automatisierungstechnik, insbesondere in der Prozessautomatisierungstechnik werden vielfach Feldgeräte eingesetzt, die zur Erfassung und/oder Beeinflussung von Prozessvariablen dienen. Zur Erfassung von Prozessvariablen dienen Sensoren, die beispielsweise in Füllstandsmessgeräte, Durchflussmessgeräte, Druck- und Temperaturmessgeräte, pH-Redoxpotentialmessgeräte, Leitfähigkeitsmessgeräte, usw. integriert sind, welche die entsprechenden Prozessvariablen Füllstand, Durchfluss, Druck, Temperatur, pH-Wert bzw. Leitfähigkeit erfassen. Zur Beeinflussung von Prozessvariablen dienen Aktoren, wie zum Beispiel Ventile oder Pumpen, über die der Durchfluss einer Flüssigkeit in einem Rohrleitungsabschnitt bzw. der Füllstand in einem Behälter geändert werden kann. Als Feldgeräte werden im Prinzip alle Geräte bezeichnet, die prozessnah eingesetzt werden und die prozessrelevante Informationen liefern oder verarbeiten. Im Zusammenhang mit der Erfindung werden unter Feldgeräten also auch Remote I/Os, Funkadapter bzw. allgemein elektronische Komponenten verstanden, die auf der Feldebene angeordnet sind. Eine Vielzahl solcher Feldgeräte wird von der Firma Endress + Hauser hergestellt und vertrieben.

Ein Feldgerät ist dabei insbesondere ausgewählt aus einer Gruppe bestehend aus Durchflussmessgeräten, Füllstandsmessgeräte, Druckmessgeräte, Temperaturmessgerät, Grenzstandsmessgeräte und/oder Analysemessgeräte. Durchflussmessgeräte sind insbesondere Coriolis-, Ultraschall-, Vortex-, thermischen und/oder magnetisch induktiven Durchflussmessgeräte. Füllstandsmessgeräte sind insbesondere Mikrowellen-Füllstandsmessgeräte, Ultraschall-Füllstandsmessgeräte, zeitbereichsreflektometrische Füllstandsmessgeräte (TDR), radiometrische Füllstandsmessgeräte, kapazitive Füllstandsmessgeräte, induktive Füllstandsmessgeräte und/oder temperatursensitive Füllstandsmessgeräte.

Druckmessgeräte sind insbesondere Absolut-,Relativ- oder Differenzdruckgeräte. Temperaturmessgeräte sind insbesondere Messgeräte mit Thermoelementen und temperaturabhängigen Widerständen.

Grenzstandsmessgeräte sind insbesondere vibronische Grenzstandsmessgeräte, Ultraschall-Grenzstandsmessgeräte und/oder kapazitive Grenzstandsmessgeräte. Analysemessgeräte sind insbesondere pH-Sensoren, Leitfähigkeitssensoren, Sauerstoff- und Aktivsauerstoffsensoren, (spektro)-photometrische Sensoren, und/oder ionenselektive Elektroden.

Fig. 2 zeigt den Aufbau eines an-sich-bekannten Feldgerätes mit einer Sensoreinheit 101 und einer abgesetzten Anzeigeeinheit 102. Abgesetzt bedeutet in diesem Zusammenhang, dass die Anzeigeeinheit 102 räumlich von der Sensoreinheit 101 getrennt ist und von dieser beabstandet ist. Der Abstand kann dabei beispielsweise einige Meter betragen. Die Stromversorgung des Feldgerätes wird durch ein Prozessleitsystem 105 gewährleistet, welches die Energie zum Betrieb des Feldgerätes bereitstellt. Die Übermittlung von Energie und Daten vom Feldgerät zum Prozessleitsystem 105 wird durch ein Verbindungskabel 103 ermöglicht, welches in der Anzeigeeinheit 102 mündet. Die Anzeigeeinheit 102 und die Sensoreinheit 101 ist wiederum mittels eines Kabels 104 verbunden und garantiert dadurch die Daten- und Energieübertragung an die Sensoreinheit 101.

Fig. 1 zeigt demgegenüber ein Feldgerät mit einer Sensoreinheit 1 und einer abgesetzten Anzeigeeinheit 2. Die Anzeigeeinheit 2 weist ein Kommunikationsmittel 10 auf, welches in Fig. 1 durch eine Funkantenne symbolisiert wird. Die Stromversorgung 11 der Anzeigeeinheit 2 erfolgt über ein Prozessleitsystem 5, welches über eine Leitung 7 mit der Anzeigeneinheit 2 verbunden ist. Über die Leitung 7 kann zudem auch eine Datenübertragung zwischen dem Prozessleitsystem 5 und der Auswerteeinheit 2 erfolgen.

Das Kommunikationsmittel 10 der Anzeigeeinheit 2 ist in seiner einfachsten Ausführungsvariante eine einfache Empfangseinheit. Sie kann allerdings auch als eine Sende- und Empfangseinheit ausgebildet sein.

Die Sensoreinheit 1 ermittelt je nach Messprinzip Messwerte, aus welchen eine Prozessgröße, eine Mediumseigenschaft und/oder die Zusammensetzung des Messmediums direkt oder durch Berechnung ermittelbar ist.

Eine typische Prozessgröße ist der Druck, die Temperatur oder aber der Durchfluss. Eine Mediumseigenschaft ist z.B. die Viskosität oder die Dichte des Mediums. Die Zusammensetzung ist bei mehrphasigen Medien wichtig oder aber bei mehrkomponentigen Medien wie z.B. Biogas, Synthesegas oder einem Produkt/Eduktgemisch in der Gasphase wie Stickstoff/Wasserstoff/Ammoniak beim Haber-Bosch-Syntheseverfahren.

Die Sensoreinheit 1 weist einen Harvester 8 auf, welcher während der Messung aus dem Prozess bzw. dem Messmedium Energie 9 gewinnt. Es gibt umfangreiche Publikationen zu geeigneten Harvestern auf dem Bereich der Prozessmesstechnik. So ist es z.B. möglich die Energie aus Druckschwankungen des Prozessmediums zu gewinnen. Eine weitere Möglichkeit der Energiegewinnung bietet sich bei Medien mit wechselnden Temperaturen, so z.B. bei kryogenen Anwendungen oder Heißdampf oder Heißgasanwendungen. Hier kann als Kernelement zur Energiegewinnung des Harvesters ein Peltierelement eingesetzt werden. Voraussetzung für den Einsatz eines Peltierelements ist ein thermischer Kontakt und eine konstante Wärmedifferenz, welche einen Wärmestrom auslöst. Im einfachsten Fall können auch Schaufelräder z.B. bei der Durchflussmessung zur Energiegewinnung eingesetzt werden, obgleich dies aufgrund des Strömungswiderstandes keine bevorzugte Variante eines Harvesters darstellt.

Der Harvester 8 ist dabei Bestandteil des Feldgerätes jedoch nicht zwingend Bestandteil der Sensoreinheit 1. So kann er bei einer Durchflussmessung an einer beliebigen Stelle einer Rohrleitung angeordnet sein und über eine Energieversorgungsleitung die Sensoreinheit 1 mit Energie speisen. In einer vorteilhaften Ausführungsvariante kann der Harvester 8 jedoch auch im Gehäuse der Sensoreinheit 1 in kompakter Weise integriert sein.

Die Anzeigeeinheit 2 weist ebenfalls ein Kommunikationsmittel 3 auf, welches in Fig. 3 ebenfalls lediglich schematisch als Funkantenne dargestellt ist. Das Kommunikationsmittel 3 der Sensoreinheit 1 ist in seiner einfachsten Ausführungsvariante eine einfache Sendeeinheit. Sie kann allerdings auch als eine Sende- und Empfangseinheit ausgebildet sein.

Wie in Fig. 1 schematisch angedeutet, erfolgt die Datenübertragung zwischen den Kommunikationsmitteln durch Funksignale 4. Der Gegenstand der Erfindung ist jedoch nicht auf Funkverbindungen beschränkt, sondern kann auch auf andere Technologien zur drahtlosen Datenübertragung ausgeweitet werden. Für den Datentransfer kann grundsätzlich jeder geeignete kabellose (wireless) Übertragungsstandard genutzt werden (z.B. LAN, WAN, MAN, PAN oder RFID). Besonders geeignet erscheinen allerdings aufgrund des geringen Energieverbrauchs WPAN Kommunikationsmittel, wie z.B. Bluetooth-Geräte.

Die Anzeigeeinheit 2 weist in der einfachsten Ausführung ein Anzeigemodul z.B. ein Display zur Anzeige bezüglich der zu ermittelnden Prozessmessgröße auf. Es kann allerdings z.B. auch eine Informationsübermittlung durch ein akustisches Signal erfolgen oder mittels einer Signallampe. Die Anzeigeeinheit kann allerdings auch noch weitere Module umfassen. So z.B. ein Auswertemodul, welches eine Berechnung der zu ermittelnden Prozessgröße und/oder der Zusammensetzung des Messmediums aus Messwerten durchführt. Die Anordnung des Auswertemoduls in der Anzeigeneinheit 2, anstelle der Sensoreinheit, ist dabei von besonderem Vorteil, da die Energie für die zur Ermittlung erforderliche Rechenleistung nicht durch

Das Feldgerät kann zudem auch mehrere Sensoreinheiten umfassen, welche durch die kabellose Datenverbindung mit der Anzeigeeinheit 1 verbunden sein können.

Zudem kann das Feldgerät auch einen vierten Betriebsmodus ausweisen, mit welchem sich das Gerät wieder anmeldet und hochfährt, sofern hinreichend Energie zur Verfügung steht.

In einer weiteren bevorzugten Ausführungsvariante weist die Anzeigeneinheit ebenfalls einen Zwischenspeicher auf. Dieser ermöglicht die Anzeige eines Messwertes, einer Prozessgröße, einer Zusammensetzung und/oder einer Medieneigenschaft beim letzten Datentransfer. Optional kann auch der Zeitpunkt des Datentransfers angezeigt werden, so dass der Nutzer weiss wann das letzte Mal ein Datenpaket übermittelt wurde und wie aktuell der angezeigte Wert ist.

Insbesondere bei der Durchflussmessung in Dampfleitung bietet sich das in Fig. 1 dargestellte Feldgerät als Durchflussmessgerät an. Der Dampf wird in der Regel ohnehin zum Energietransport erzeugt. Es ist daher leicht möglich, z.B. mit einer Thermosäule elektrische Energie aus der Wärmeenergie des Dampfes zu gewinnen. Die Aufteilung in eine Messelektronik und Auswerteelektronik kommt der Methode zur Energiegewinnung entgegen, da nur ein Bruchteil der Gesamtenergieaufnahme des Messgeräts zum Betrieb der Messelektronik erforderlich ist. Dieser Teil lässt sich leicht aus dem Prozess gewinnen.

Es würde nur begrenzt Sinn machen, die Messelektronik und Auswerteelektronik mit Energie aus dem Prozess zu versorgen und nur das Messergebnis über eine Funkverbindung zu übertragen, denn in der Regel wird das Messergebnis irgendwie in einem Prozessleitsystem (PLS) weiter verarbeitet oder zumindest aufgezeichnet. Die Weiterverarbeitung des Messergebnisses erfordert vorzugsweise durch eine drahtgebundene Verbindung zwischen dem Funkempfänger, also der Anzeigeeinheit, und der Weiterverarbeitungseinrichtung, also dem Prozessleitsystem.

Durch die vorbeschriebene Aufteilung der Signal (Daten) und Energieflüsse ist sowohl aus energetische als auch technischer Sicht die günstigste Lösung.

Der Vorteil besteht aus technischer Sicht insbesondere darin, dass die Anzeigeneinheit mit vorzugsweise integrierter Auswerteelektronik auch bei fehlender Energieversorgung aus dem Prozess weiterhin funktional mit dem Prozessleitsystem verbunden ist. Es stehen dann zwar keine Messwerte zur Verfügung, aber das Messgerät lässt sich weiterhin parametrieren und es stehen Diagnosemeldungen zur Verfügung (z.B. eben diejenige, dass vorübergehend keine Energie zum Betrieb der Messelektronik vorhanden ist).

Würde dagegen das gesamte Messgerät ausschliesslich mit aus dem Prozess gewonnener Energie betrieben, wäre keine Unterscheidung zwischen einem vorübergehenden Energieausfall und einem Totalausfall des Gerätes aufgrund eines Defektes möglich.

Konkret auf die Durchflussmessung für Dampfanwendungen kann beispielsweise ein Wirbelzähler genutzt werden. Die lokale Messelektronik bzw. Sensoreinheit eines Wirbelzählers an einer Dampfleitung wird von einem thermoelektrischen Wandler, der Wärme in elektrische Energieumwandelt, mit Energie versorgt. Das Rohsignal wird soweit aufbereitet, dass eine digitale Übertragung möglich ist. Das digitalisierte Signal wird drahtlos an einen Empfänger, hier dem Kommunikationsmittel 3, geleitet, der mit der eigentlichen Auswerteelektronik in der Anzeigeeinheit 2 verbunden ist. Die Auswerteelektronik ihrerseits benutzt den Funkkanal zur Parametrierung der Messelektronik (z.B. Einstellung der Filter, Abtastrate, etc.). Die Auswerteelektronik bereitet das übertragene Signal auf, so dass die vom Anwender gewünschte Durchflussmessgrösse (z.B. Volumenstrom, Massenstrom, etc.) in der Anzeige dargestellt werden kann und/oder in Form eines üblichen Feldbusübertragungssystem, z.B. 4...20 mA Stromschleife, Profibus, FF, etc., an ein Prozessleitsystem oder Ähnliches weitergeleitet werden kann. Die Anzeigeneinheit mit integrierter Auswerteelektronik selbst wird dabei vom Prozessleitsystem mit Energie versorgt.

Wie bereits näher erörtert, kann das Feldgerät als Vortex-Durchflussmessgerät ausgestaltet sein. Es kann allerdings auch als ein anderes Durchflussmessgerät, ein Druck- oder Differenzdruckmessgerät, als ein Temperatursensor oder als Analysemessgerät ausgestaltet sein. Das Feldgerät kann vielfältig in der Prozessmesstechnik ausgestaltet sein. Die vorbeschriebene Ausgestaltung des erfindungsgemäßen Feldgerätes als ein Vortex-Durchflussmessgerät ist in diesem Kontext jedoch besonders bevorzugt - insbesondere sofern der Energie-Harvester die gewonnene Energie aus einer Temperaturdifferenz gewinnt. Die Vorteile der Ausgestaltung des Feldgerätes als Vortex-Durchflussmessgerät werden nachfolgend näher erläutert.

Vortex Durchflussmessgeräte werden häufig in Dampfleitungen eingesetzt. Diese haben typischerweise Betriebstemperaturen, die deutlich oberhalb der Umgebungstemperatur liegen. Andererseits werden die Messgeräte selbst oft an unzugänglichen Stellen eingebaut. Hier bietet es sich an, die Vorortanzeige abgesetzt an einer für die Ablesung gut zugänglichen Stelle zu montieren. Für die Datenübertragung von der Messtelle zur Vorortanzeige ist eine drahtlose Kommunikation vorteilhaft. Für die Messstelle selbst kann dann auf eine eigene Verdrahtung verzichtet werden, wenn sie ihre Energie aus der Temperaturdifferenz zwischen Betriebstemperatur und Umgebungstemperatur gewinnt. Ein Nachteil der Energiegewinnung aus der Betriebstemperatur des Fluides ist, dass die Energie bei Stillstand nicht zur Verfügung steht. Bei Dampfleitungen tritt dieser Nachteil weniger in Erscheinung, da diese zum sicheren Betrieb zunächst erwärmt werden bevor der Prozessdurchfluss startet, d.h. eine Durchflussanzeige ist immer möglich, da die Rohrleitung zum Betrieb schon warm ist. Nachteilig bleibt jedoch, das während der Stillstandszeiten keine Informationen über die Messstelle erhältlich sind. Die Leitstelle kann also nicht unterscheiden, ob das Messgerät defekt ist oder nur vorübergehend keine Energie besitzt. Die abgesetzte Vorortanzeige, die nicht vom Energy Harvester mit Energie versorgt wird, kann aber über verschiedene Wege weiter mit der Leitstelle kommunizieren. So ist sichergestellt, dass zwischen Defekt und vorübergehendem Stillstand unterschieden werden kann. Dies insbesondere dann, wenn sich die Messstelle bei der Vorortanzeige jeweils an- und abmeldet; die drahtlose Kommunikation also nur im Bedarfsfall, d.h. wenn geerntete Energie zur Verfügung steht, stattfindet.

## Patentansprüche

1. Feldgerät der Prozessautomatisierung zur Ermittlung einer Prozessgröße, einer Mediumseigenschaft und/oder der Zusammensetzung eines Mediums, umfassend zumindest eine Sensoreinheit (1), einen Energie-Harvester (8) und eine Anzeigeeinheit (2),
wobei die Sensoreinheit (1) und die Anzeigeeinheit (2) räumlich getrennt und beabstandet zueinander angeordnet sind;
wobei die Anzeigeeinheit (1) und die Sensoreinheit (2) über eines oder mehrere Kommunikationsmittel (3, 10) verfügen, welche ausgelegt sind zum Aufbau eines drahtlosen Datentransfers (6) zwischen der Anzeigeeinheit (2) und der Sensoreinheit (1) des Feldgerätes; und
wobei zumindest das Kommunikationsmittel (3) der Sensoreinheit (1) mittels des Energie-Harvesters (8) betrieben wird,
**dadurch gekennzeichnet, dass** das Feldgerät zumindest zwei Betriebsmodi aufweist,
wobei
I ein erster Betriebsmodus einen intermittierenden Datentransfer ausführt,
wobei der intermittierende Datentransfer (6) mit Sendepausen erfolgt,
wobei Länge der Sendepausen von einer Steuervorrichtung vorgebbar ist,
wobei als Steuergröße ein Energie-Grenzwert benutzt wird; und
II ein zweiter Betriebsmodus eine Abmeldefunktion bei Energiemangelversorgung eines der Kommunikationsmittels umfasst, in welchem zweiten Betriebsmodus sich die Sensoreinheit bei der Anzeigeeinheit im Falle einer Energiemangelversorgung abmeldet.

2. Feldgerät nach Anspruch 1, **dadurch gekennzeichnet, dass** die maximale Datenübertragungsrate des drahtlosen Datentransfers gleich oder kleiner ist als 4 Mbit/s, insbesondere 3 Mbit/s.

3. Feldgerät nach Anspruch 1 oder 2, **dadurch gekennzeichnet, dass** der maximale Abstand zwischen der Sensoreinheit (1) und der Anzeigeeinheit (2) gleich oder kleiner ist als 25 m.

4. Feldgerät nach einem der vorhergehenden Ansprüche, **dadurch gekennzeichnet, dass** die maximale Datenübertragungsrate gleich oder kleiner ist als 1024 Mbit/s und der maximale Abstand zwischen der Sensoreinheit (1) und dem Anzeigeeinheit (2) kleiner oder gleich 15 m beträgt.

5. Feldgerät nach einem der vorhergehenden Ansprüchen, **dadurch gekennzeichnet, dass** es sich bei dem Kommunikationsmittel (3, 10) um eines der mehrere WPAN-Kommunikationsmittel handelt.

6. Feldgerät einem der vorhergehenden Ansprüche, **dadurch gekennzeichnet, dass** die Anzeigeeinheit (2) mit einem Prozessleitsystem (5) über zumindest eine Leitung (7) für den Energie- und/oder Datenverkehr (11) verbunden ist.

7. Feldgerät nach einem der vorhergehenden Ansprüche, **dadurch gekennzeichnet, dass** der Energie-Harvester (8) ein Bestandteil der Sensoreinheit (1) ist und insbesondere in einem Gehäuse der Sensoreinheit (1) angeordnet ist, vorzugweise zwischen der Rohrleitung und dem Gehäuse der Vorortelektronik.

8. Feldgerät nach einem der vorhergehenden Ansprüche, **dadurch gekennzeichnet, dass** ein Datentransfer (6) nur auf Abfrage durch den Bediener erfolgt.

9. Feldgerät nach einem der vorhergehenden Ansprüche, **dadurch gekennzeichnet,**
**dass** die Sensoreinheit (1), insbesondere ausschließlich, durch den Energie-Harvester (8) betreibbar ist; und/oder
**dass** die Energieversorgung der Anzeigeeinheit unabhängig von der vom Energie-Harvester gewonnenen Energie erfolgt.

10. Feldgerät nach einem der vorhergehenden Ansprüche, **dadurch gekennzeichnet, dass** die Sensoreinheit (1) einen Datenspeicher umfasst, in welchem Messdaten bezüglich der Prozessgröße gesammelt und bei einem Datentransfer bereitgestellt werden.

11. Feldgerät nach einem der vorhergehenden Ansprüche, **dadurch gekennzeichnet, dass** die Sensoreinheit (1) keinen Energiezwischenspeicher aufweist.

12. Feldgerät nach einem der vorhergehenden Ansprüche, **dadurch gekennzeichnet, dass** im zweiten Betriebsmodus mit der zur Verfügung stehenden Energie ein Signal ausgesandt wird, welches der Anzeigeeinheit anzeigt, dass eine Energiemangelversorgung vorliegt.

13. Feldgerät nach Anspruch 6 und 12, **dadurch gekennzeichnet, daß** die Information über das Vorliegen der Energiemangelversorgung an das Prozessleitsystem übertragen wird.

14. Verwendung des Feldgerätes nach einem der vorhergehenden Ansprüche in einem explosionsgeschützten Bereich.

## Claims

1. Field device used in process automation for determining a process variable, a medium property and/or the composition of a medium, comprising at least a sensor unit (1), an energy harvester (8) and a display unit (2),
wherein the sensor unit (1) and the display unit (2) are arranged in separate locations at a distance from one another;
wherein the display unit (1) and the sensor unit (2) have one or more means of communication (3, 10), which are designed to establish wireless data transfer (6) between the display unit (2) and the sensor unit (1) of the field device; and
wherein at least the means of communication (3) of the sensor unit (1) is operated by the energy harvester (8),
**characterized in that** the field device has at least two operating modes, wherein
I a first operating mode performs intermittent data transfer,
wherein the intermittent data transfer (6) is performed with intermissions,
wherein the length of the intermissions can be defined by a control unit,
wherein an energy limit value is used as the control variable; and
II a second operating mode comprises a logout function in the event of deficient energy supply for one of the means of communication, wherein in said second operating mode the sensor unit logs out of the display unit in the event of a deficient energy supply.

2. Field device as claimed in Claim 1, **characterized in that** the maximum data transmission rate of the wireless data transfer is equal to or less than 4 Mbit/s, particularly 3 Mbit/s.

3. Field device as claimed in Claim 1 or 2, **characterized in that** the maximum distance between the sensor unit (1) and the display unit (2) is equal to or less than 25 m.

4. Field device as claimed in one of the previous claims, **characterized in that** the maximum data transmission rate is equal to or less than 1024 Mbit/s and the maximum distance between the sensor unit (1) and the display unit (2) is less than or equal to 15 m.

5. Field device as claimed in one of the previous claims, **characterized in that** the means of communication (3, 10) is one of the multiple WPAN means of communication.

6. Field device as claimed in one of the previous claims, **characterized in that** the display unit (2) is connected to a process control system (5) via at least a cable (7) for energy and/or data transfer (11).

7. Field device as claimed in one of the previous claims, **characterized in that** the energy harvester (8) is an integral part of the sensor unit (1) and, in particular, is arranged in a housing of the sensor unit (1), preferably between the pipe and the housing of the onsite electronics.

8. Field device as claimed in one of the previous claims, **characterized in that** data transfer (6) only occurs on request by the operator.

9. Field device as claimed in one of the previous claims, **characterized in that** the sensor unit (1) can be operated by the energy harvester (8), particularly exclusively;
and/or
**in that** energy is supplied to the display unit independently of the energy from the energy harvester.

10. Field device as claimed in one of the previous claims, **characterized in that** the sensor unit (1) comprises a data memory in which measured data regarding the process variable are gathered and are provided during data transfer.

11. Field device as claimed in one of the previous claims, **characterized in that** the sensor unit (1) does not have an energy buffer.

12. Field device as claimed in one of the previous claims, **characterized in that** - with the energy available - a signal is transmitted in the second operating mode that signals to the display unit that the energy supply is deficient.

13. Field device as claimed in Claim 6 and 12, **characterized in that** the information on the occurrence of an energy supply deficiency is transmitted to the process control system.

14. Use of the field device as claimed in one of the previous claims in a hazardous area.

## Revendications

1. Appareil de terrain de la technique d'automatisation des processus, destiné à la détermination d'une grandeur process, d'une propriété d'un produit et/ou de la composition d'un produit, comprenant au moins une unité de capteur (1), un récupérateur d'énergie (8) et une unité d'affichage (2),
l'unité de capteur (1) et l'unité d'affichage (2) étant séparées dans l'espace et espacées l'une par rapport à l'autre ;
l'unité d'affichage (1) et l'unité de capteur (2) disposant d'un ou de plusieurs moyens de communication] (3, 10), lesquels moyens sont conçus pour établir un transfert de données sans fil (6) entre l'unité d'affichage (2) et l'unité de capteur (1) de l'appareil de terrain ; et
au moins le moyen de communication (3) de l'unité de capteur (1) étant exploité à l'aide du récupérateur d'énergie (8),
**caractérisé en ce que** l'appareil de terrain présente au moins deux modes de fonctionnement,
I un premier mode de fonctionnement exécutant un transfert de données intermittent, le transfert de données intermittent (6) s'effectuant avec des pauses d'émission,
la longueur des pauses d'émission étant prédéfinissable par un dispositif de commande,
une valeur seuil d'énergie étant utilisée comme grandeur de commande ; et
II un deuxième mode de fonctionnement comprenant une fonction de déconnexion en cas d'alimentation en énergie insuffisante de l'un des moyens de communication, deuxième mode de fonctionnement dans lequel l'unité de capteur se déconnecte auprès de l'unité d'affichage en cas d'alimentation en énergie insuffisante.

2. Appareil de terrain selon la revendication 1, **caractérisé en ce que** la vitesse de transmission maximale du transfert de données sans fil est inférieure ou égale à 4 Mbit/s, notamment à 3 Mbit/s.

3. Appareil de terrain selon la revendication 1 ou 2, **caractérisé en ce que** la distance maximale entre l'unité de capteur (1) et l'unité d'affichage (2) est inférieure ou égale à 25 m.

4. Appareil de terrain selon l'une des revendications précédentes, **caractérisé en ce que** la vitesse de transmission maximale est inférieure ou égale à 1 024 Mbit/s et la distance maximale entre l'unité de capteur (1) et l'unité d'affichage (2) est inférieure ou égale à 15 m

5. Appareil de terrain selon l'une des revendications précédentes, **caractérisé en ce que** concernant le moyen de communication (3, 10), il s'agit d'un ou de plusieurs moyens de communication WPAN.

6. Appareil de terrain selon l'une des revendications précédentes, **caractérisé en ce que** l'unité d'affichage (2) est reliée avec un système numérique de contrôle commande (5) via au moins un câble (7) pour le transport de l'énergie et/ou des données (11).

7. Appareil de terrain selon l'une des revendications précédentes, **caractérisé en ce que** le récupérateur d'énergie (8) fait partie intégrante de l'unité de capteur (1) et est disposé notamment dans un boîtier de l'unité de capteur (1), de préférence entre la conduite et le boîtier de l'électronique locale.

8. Appareil de terrain selon l'une des revendications précédentes, **caractérisé en ce qu'**un transfert de données (6) n'intervient que sur demande de l'opérateur.

9. Appareil de terrain selon l'une des revendications précédentes, **caractérisé en ce que** l'unité de capteur (1) peut être exploitée, notamment exclusivement, par le récupérateur d'énergie (8) : et/ou
**en ce que** l'alimentation en énergie de l'unité d'affichage s'effectue indépendamment de l'énergie récupérée par le récupérateur d'énergie.

10. Appareil de terrain selon l'une des revendications précédentes, **caractérisé en ce que** l'unité de capteur (1) comprend une mémoire de données, dans laquelle les données de mesure relatives à la grandeur de processus sont collectées et mises à disposition pendant un transfert de données.

11. Appareil de terrain selon l'une des revendications précédentes, **caractérisé en ce que** l'unité de capteur (1) ne comporte pas de dispositif de stockage intermédiaire de l'énergie.

12. Appareil de terrain selon l'une des revendications précédentes, **caractérisé en ce qu'**avec l'énergie mise à disposition dans le deuxième mode de fonctionnement, un signal est émis, indiquant à l'unité d'affichage l'existence d'une alimentation en énergie insuffisante.

13. Appareil de terrain selon les revendications 6 et 12, **caractérisé en ce que** l'information de l'existence d'une alimentation en énergie insuffisante est transmise au système numérique de contrôle commande.

14. Utilisation de l'appareil de terrain selon l'une des revendications précédentes dans une zone antidéflagrante.
